# FASCICULE DE BREVET EUROPEEN

(11) **EP 1 376 026 B1**
(45) Date de publication et mention de la délivrance du brevet: **16.08.2006**
(21) Numéro de dépôt: 03360078.4
(22) Date de dépôt: 27.06.2003
(51) Int. Cl.: F24J 2/04, F24J 2/40

(54) **Dispositif de fermeture fixe ou mobile pour ouverture dans des bâtiments apte à capter l'énergie solaire**
Feste oder mobile Schliessvorrichtung für Öffnungen in Gebäuden, die fähig sind, Solarenergie einzufangen
Fixed or mobile device of closure for openings in buildings, capable of capturing solar energy

(30) Priorité: 28.06.2002 FR 0208110
(43) Date de publication de la demande: 02.01.2004
(73) Titulaire: Robin Sun SARL, 67000 Strasbourg (FR)
(72) Inventeur: Robin, Jean-Marc, 67084 Strasbourg (FR)
(74) Mandataire: Rhein, Alain

(56) Documents cités:
- CA-A- 1 082 095
- DE-A- 19 722 029
- FR-A- 2 442 412
- GB-A- 2 125 531
- GB-A- 2 273 151
- US-A- 4 090 497
- US-A- 4 159 707
- US-A- 4 265 222
- US-A- 4 382 436

## Description

L'invention concerne un dispositif de fermeture fixe ou mobile pour ouverture dans des bâtiments, apte à capter l'énergie solaire.

On connaît déjà de nombreux types de capteurs d'énergie solaire, avec lesquels cette dernière est utilisée pour le chauffage, la production d'eau chaude sanitaire, ou transformée en énergie, généralement électrique.

Les capteurs les plus fréquents, consistent en des capteurs plans vitrés, qui comportent une paroi transparente éventuellement recouverte d'un dépôt diminuant sa réflexion et derrière laquelle est disposé un absorbeur lié à un système de circulation contenant un fluide caloporteur. Ces capteurs sont disposés dans des endroits exposés au soleil, soit rapportés, soit intégrés aux toitures ou aux façades des bâtiments comme cela ressort du document FR 2.532.728, ou bien dans les volets de ces mêmes ouvertures comme décrit dans le document FR 2.523.201.

Ces deux dispositifs sont toutefois d'une utilisation limitée, pour les premiers la surface d'exposition est restreinte, la fabrication relativement complexe, et le réglage des moyens capteurs, en fonction de l'angle d'incidence du rayonnement solaire, contraignant. Quant aux seconds, la récupération d'énergie est dépendante de la position du volet.

On connaît également des dispositifs de capteurs comprenant une surface vitrée incorporant des moyens d'absorption et/ou réflecteurs des apports solaires, associés à un moyen de transfert d'énergie calorifique tel qu'un fluide caloporteur.

Le document FR 2.442.412 propose ainsi un dispositif de capteur comprenant un panneau comportant deux parois vitrées montées sur un châssis entre lesquelles sont disposés des éléments aptes à absorber les apports solaires et qui sont liés à un circuit de collecte et de transport de l'énergie calorifique ainsi recueillie.

Ce dispositif de capteur présente comme avantage de laisser passer la lumière, puisque les deux parois vitrées peuvent être translucides, alors que généralement seule la paroi extérieure l'est tandis que la paroi intérieure est opaque. Par contre, outre sa fabrication complexe, son utilisation optimale est contraignante, puisque là-encore il y a nécessité d'orienter les éléments absorbeurs au gré du déplacement du soleil. Il serait bien entendu possible d'adjoindre aux éléments absorbeurs des moyens de poursuite de la course du soleil, avec pour conséquence une complexification du dispositif.

Par ailleurs, afin d'augmenter les performances d'absorption du dispositif, il est possible d'augmenter la surface des absorbeurs entre les deux parois vitrées, mais au détriment de la translucidité de l'ensemble.

On connaît également les documents US 4.159.707, CA 1.082.095 et US 4.090.497 qui décrivent chacun un collecteur d'énergie solaire comprenant une jalousie enfermée dans une enceinte vitrée dans laquelle circule un gaz apte à véhiculer les calories emmagasinées par les lames de ladite jalousie. Dans le document US 4.159.707 les lames sont orientables à volonté en fonction de l'incidence des rayons, en sorte que de pouvoir réfléchir lesdits rayons au moins deux fois d'une lame vers la lame voisine en vue de son piégeage. Les dispositifs décrits dans ces documents présentent les mêmes inconvénients que celui du document FR 2.442.412.

On connaît également le document US 4.265.222 qui décrit un collecteur d'énergie solaire comprenant une enceinte vitrée dans laquelle circule un gaz apte à véhiculer les calories emmagasinées par un moyen d'absorption qui se présente sous la forme d'un écran métallique constitué d'une succession de microlames horizontales espacées d'une distance inférieure au pouvoir de résolution normale de l'oeil humain. En fait il s'agit d'un capteur solaire au travers duquel on peut voir du fait de la structure et des dimensions des moyens d'absorption. Les lames de l'écran sont inclinées et maintenues dans une position fixe, leur face supérieure est absorbante tandis que leur face inférieure est réfléchissante. L'inconvénient principal de ce dispositif, outre que la quantité d'énergie récupérée est directement liée à la quantité d'énergie émise par le soleil, consiste en ce qu'il n'est pas vraiment transparent.

La présente invention a pour but de remédier aux divers inconvénients précités, en proposant un dispositif de fermeture fixe ou mobile pour ouverture dans des bâtiments, apte à capter l'énergie solaire de manière modulaire en fonction de la hauteur du soleil dans le ciel, et sans qu'il soit nécessaire d'intervenir manuellement ou mécaniquement, et tout en maintenant une connexion visuelle avec l'extérieur et en favorisant la clarté dans le bâtiment.

Le dispositif de fermeture fixe ou mobile pour ouverture dans des bâtiments, apte à capter l'énergie solaire, selon l'invention, est du type panneau vitré transparent comprenant au moins deux parois transparentes intérieure et extérieure, entretoisées par l'intermédiaire d'un profilé intercalaire, délimitant un espace où sont disposés des moyens d'absorption aptes à absorber les apports solaires et qui sont liés à un circuit de collecte et de transport vers l'extérieur de l'énergie calorifique ainsi recueillie, et il se caractérise essentiellement en ce qu'au moins ladite paroi intérieure comporte des moyens réflecteurs du rayonnement solaire aptes, en coopération avec lesdits moyens d'absorption, à permettre l'utilisation d'une partie du rayonnement solaire indirectement tandis qu'une autre partie de ce dernier est utilisée directement, la disposition desdits moyens réflecteurs par rapport auxdits moyens d'absorption étant telle que la partition est réalisée dans une proportion qui varie de manière automatique avec la hauteur solaire, et que la transparence dudit panneau vitré demeure constante.

Le dispositif selon l'invention permet ainsi de capter les apports solaires de façon sélective en fonction de l'angle d'incidence du rayonnement solaire, de manière automatique, sans qu'il soit nécessaire de recourir à des moyens manuels ou mécaniques de poursuite du soleil.

Selon une caractéristique additionnelle du dispositif selon l'invention, les moyens d'absorption comportent une partie destinée à recevoir directement le rayonnement solaire, et une seconde partie destinée à recevoir ledit rayonnement par réflexion.

Selon un premier mode de réalisation du dispositif selon l'invention, les deux parois transparentes comportent chacune des moyens réflecteurs aptes à renvoyer au moins une partie du rayonnement solaire de l'une vers l'autre, tandis que l'énergie captée est véhiculée par l'ambiance étanche du panneau prise comme fluide caloporteur, et qui est en liaison avec une circulation extérieure audit panneau pour former un circuit indépendant.

Dans ce mode réalisation, les parois transparentes comportent chacune des moyens réflecteurs, éventuellement en regard, qui sont destinés à piéger le rayonnement solaire dans l'espace intercalaire, et l'une au moins constitue le moyen d'absorption tandis que l'espace interne aux deux parois communique avec l'extérieur pour permettre le transport de l'énergie calorifique ainsi recueillie.

Selon un deuxième mode de réalisation du dispositif selon l'invention, le circuit de transport de l'énergie calorifique est fait ou est revêtu d'un matériau apte à absorber les apports solaires.

Dans ce mode de réalisation, le circuit consiste lui-même en les moyens d'absorption, il peut d'ailleurs avantageusement présenter un profil adapté à cet effet, c'est-à-dire une première partie et une seconde de formes différentes.

Selon un mode de réalisation préférentiel du dispositif selon l'invention, le circuit de collecte et de transport se présente sous la forme d'un tube parcourant l'espace interne aux deux parois transparentes, et duquel partent deux ailettes, chacune en regard de l'une desdites parois transparentes et qui constituent les première et seconde parties.

Selon une autre caractéristique additionnelle du dispositif selon l'invention, les moyens d'absorption et les moyens réflecteurs sont arrangés en segments parallèles, tandis que les moyens réflecteurs se présentent sous forme de bandes parallèles auxdits segments.

L'intermittence de bandes laisse passer la lumière et, selon la hauteur solaire elle peut laisser passer le rayonnement solaire, tel que par exemple un système de jalousie fixe.

Selon une autre caractéristique additionnelle du dispositif selon l'invention, les moyens réflecteurs sont partiellement transparents.

Selon une autre caractéristique additionnelle du dispositif selon l'invention, l'espace délimité par les deux parois transparentes renferme un ou plusieurs gaz inertes.

Selon une autre caractéristique additionnelle du dispositif selon l'invention, l'espace délimité par les deux parois transparentes est dépressurisé.

Selon une autre caractéristique additionnelle du dispositif selon l'invention, les moyens réflecteurs sont déposés sur une couche sélective aux infrarouges.

Selon une autre caractéristique additionnelle du dispositif selon l'invention, les parois transparentes comportent un dépôt réfléchissant au rayonnement visible et/ou infrarouge, ou bien diminuant la réflexion, ou ayant une constitution réduisant l'absorption au rayonnement visible.

De manière avantageuse, le circuit de collecte comprend un tube sortant du panneau ou entrant dans ce dernier par l'intermédiaire d'un système étanche qui comprend un tube de verre introduit dans un évidement pratiqué dans le profilé intercalaire et solidarisé à celui-ci de manière étanche tandis qu'un joint réalise l'étanchéité entre lesdits tubes.

Les avantages et les caractéristiques du dispositif selon l'invention, ressortiront plus clairement de la description qui suit et qui se rapporte au dessin annexé, lequel en représente un mode de réalisation non limitatif.

### Dans le dessin annexé :

La figure 1a représente une vue schématique partielle et en coupe transversale d'un dispositif de fermeture fixe ou mobile pour ouverture dans des bâtiments, apte à capter l'énergie solaire selon l'invention.

La figure 1b représente la même vue lors d'une autre phase de fonctionnement.

La figure 1c représente la même vue dans une autre phase de fonctionnement.

La figure 2a représente une vue schématique partielle et en coupe transversale d'une variante du même dispositif.

La figure 2b représente la même vue lors d'une autre phase de fonctionnement.

La figure 2c représente la même vue lors d'une autre phase de fonctionnement.

La figure 3 représente une vue schématique en coupe transversale d'une partie d'un dispositif de capteur selon l'invention.

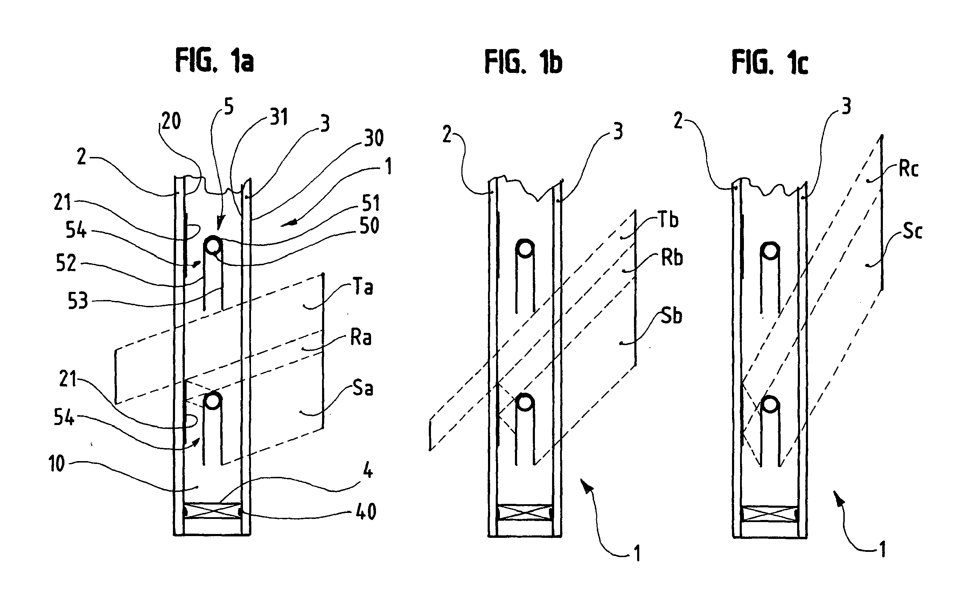

En référence aux figures 1a, 1b et 1c, on peut voir un dispositif de fermeture fixe ou mobile pour ouverture dans des bâtiments, apte à capter l'énergie solaire selon l'invention, qui consiste en un panneau 1 comprenant deux parois transparentes, intérieure 2 et extérieure 3 entretoisées par l'intermédiaire d'un profilé intercalaire 4 et délimitant un espace 10 renfermant un gaz inerte. L'étanchéité est réalisée entre le profilé intercalaire 4 et les parois transparentes 2 et 3 par l'intermédiaire, pour chacune de celles-ci, d'un cordon 40 fait d'un matériau imperméable du type butyle, tandis qu'un dessicant est introduit dans le profilé intercalaire 4.

De manière avantageuse, il est possible que l'une des parois 2 et 3 comporte un dépôt sélectif infrarouge, et que la paroi 3 comporte un traitement antireflet.

Par ailleurs, le panneau 1 renferme un circuit 5 formant une circulation parallèle ou sérielle, en forme de serpentin par exemple, circulant dans l'espace 10 entre les deux parois 2 et 3, entrant et sortant de préférence par le chant en traversant le profilé intercalaire 4 comme cela sera montré plus loin, et qui comprend, de manière connue en soi, un tube 50 destiné à la collecte et au transport de l'énergie calorifique par l'intermédiaire d'un fluide caloporteur.

Le circuit 5 comprend également des éléments aptes à absorber les apports solaires, en l'occurrence ils consistent selon l'invention en une bande 51 faite d'un matériau conducteur tel que du métal, de type cuivre ou aluminium, associé à un revêtement absorbant, pliée selon un axe longitudinal médian pour présenter une section transversale en forme de U inversé et créer deux ailes 52 et 53, et positionnée à cheval sur le tube 50, en sorte que les ailes 52 et 53 soient parallèles aux parois 2 et 3, et en regard respectivement de celles-ci.

Le circuit 5 est agencé pour former une superposition de segments parallèles 54, pour chacun desquels le tube 50 est en partie supérieure tandis que les ailes 52 et 53 s'étendent vers le bas.

D'autre part, également selon l'invention, la face interne 20 de la paroi intérieure 2 comporte des moyens réflecteurs se présentant sous la forme de bandes horizontales 21, disposées chacune au niveau de chacun des segments 54. L'emplacement et la hauteur des bandes 21 sont choisis en fonction essentiellement de l'espacement et de la hauteur des segments 54, ailes 52 et 53 comprises, ainsi que du résultat énergétique escompté.

Dans le mode de réalisation représenté, les bandes 21 sont d'une largeur sensiblement égale à celle des segments 54 et inférieure à la distance séparant deux segments 54 voisins, et elles présentent chacune une zone extrême supérieure 22 qui déborde le plan horizontal tangent au tube 50 en regard.

On notera que la disposition des bandes 21 par rapport aux segments 54 permet de libérer des espaces transversaux autorisant la vision au travers du panneau vitré 1.

Les figures 1a, 1b et 1 représentent chacune le même panneau 1 à un moment différent de la journée, c'est-à-dire qu'elles correspondent à différents angles d'incidence du rayonnement solaire. La succession des figures 1a, 1b et 1c correspond ainsi la montée du soleil et donc à un accroissement de l'angle d'incidence.

Sur la figure 1a, le soleil est légèrement au-dessus de l'horizon l'angle d'incidence du rayonnement solaire est faible, tout comme le sont les apports solaires, en sorte qu'une grande partie Sₐ de ce rayonnement frappe les ailes 53, qu'une autre grande partie Tₐ traverse les deux parois 2 et 3, tandis qu'une faible partie Rₐ est réfléchie par les extrémités supérieures des bandes réfléchissantes vers les ailes 52.

Sur la figure 1b, le soleil est plus haut dans le ciel, l'angle d'incidence a augmenté, il est d'environ 45°, une grande partie S_{b} du rayonnement frappe les ailes 53, une partie plus faible R_{b} de ce rayonnement est réfléchie par les zones extrêmes supérieures 21 vers les ailes 52, R_{b} étant supérieure à Rₐ, tandis qu'une partie T_{b} traverse les deux parois 2 et 3, T_{b} étant inférieure à R_{b} et inférieure à Tₐ.

Sur la figure 1c, le soleil est encore pus haut dans le ciel, l'angle d'incidence est encore plus grand, de l'ordre de 60°, une grande partie S_{c} du rayonnement frappe les ailes 53, tandis qu'une partie plus faible R_{c} est réfléchie par les bandes réfléchissantes 21 sur les ailes 52, R_{c} étant plus grande que R_{b}, et qu'aucun rayonnement ne traverse les parois 2 et 3.

On peut ainsi comprendre que plus le soleil monte dans le ciel plus l'interception du flux solaire par le moyen réflecteur devient importante au profit de l'aile 52 donc du circuit 5, ce qui réduit d'autant les gains passifs directs à travers le vitrage, c'est-à-dire le rayonnement traversant les parois transparentes 2 et 3 ce qui limite les risques d'inconfort solaire tout en maintenant constante la transparence du panneau vitré 1.

On notera que dans un autre mode de réalisation, non représenté, le tube 50 peut constituer lui-même l'élément d'absorption, en étant par exemple recouvert d'un matériau adéquat tel qu'un absorbeur sélectif, c'est-à-dire cumulant une forte absorption et une faible émissivité. Dans ce cas une partie de ce tube est destinée à recevoir directement le rayonnement, tandis qu'une autre partie est destinée à recevoir la partie réfléchie de celui-ci. A cet effet, le tube peut présenter avantageusement des sections différentes de ronde, oblongue par exemple pour augmenter la surface de réception.

Il y a également lieu de remarquer que dans un autre mode de réalisation, également non représenté, le dispositif selon l'invention est dépourvu de circuit 5 tel qu'évoqué précédemment. Dans ce cas la collecte de l'énergie calorifique est réalisée par le milieu ambiant de l'espace intercalaire 10, tandis que sont pratiqués des ponts de communication avec l'extérieur pour le transport de cette énergie. Dans ce mode de réalisation il est prévu de piéger le rayonnement solaire en fonction de l'angle d'incidence des rayons, et à cet effet les deux parois comportent des moyens réflecteurs aptes à piéger et limiter les apports solaires directs. Il est ainsi possible de prévoir une disposition de ces éléments réflecteurs tels que la quantité de rayonnement piégée augmente avec l'angle d'incidence. On notera également que dans ce mode de réalisation la paroi 2 et/ou la paroi 3 constituent en partie les moyens d'absorption.

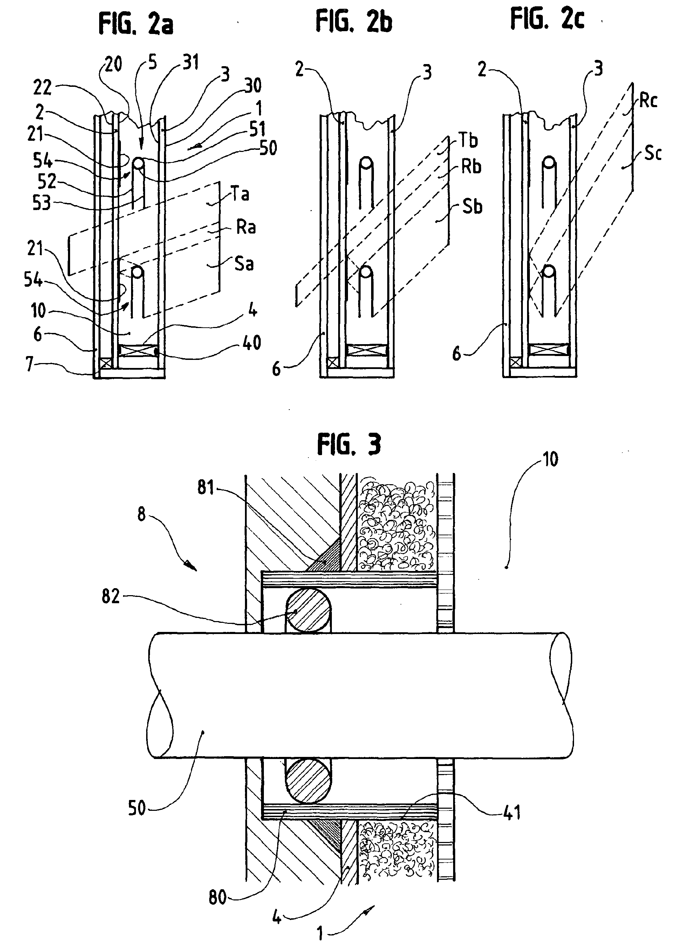

En référence maintenant aux figures 2a, 2b et 2c, on peut voir une variante du dispositif selon l'invention, qui correspond à l'adjonction d'une troisième paroi 6, du côté de la paroi 2, et entretoisée avec cette dernière de manière étanche à l'aide d'un profilé 7, tandis que les moyens réflecteurs se présentent sous la forme de bandes 22 disposées sur la face externe 23 de la paroi 2, par rapport au panneau 1, sachant qu'il est également possible qu'elles soient disposées sur la face 20 ou sur l'une ou l'autre des faces de la paroi 6.

Cette architecture permet, en plus des propriétés du dispositif selon l'invention vues précédemment, de limiter les transferts d'énergie entre le dispositif et l'intérieur du bâtiment ou d'introduire des combinaisons de variantes suivant l'invention. L'utilisation d'une paroi intercalaire 2 plus petite que son symétrique 3 et 6 permet également, dans une fabrication qui se fait en deux temps, de former une deuxième étanchéité autour du dispositif selon l'invention, et de limiter les ponts thermiques afin par exemple d'avoir des caractéristiques thermiques différentes suivant les espaces intercalaires par exemple en utilisant par espace des gaz avec des propriétés différentes ou en mettant un au moins des espaces intercalaires en communication avec l'extérieur pour former un système pariéto-dynamique.

En référence maintenant à la figure 3, on peut voir un dispositif de joint 8 permettant de réaliser de manière étanche l'entrée ou la sortie du tube 50 d'entre les deux parois transparentes 2 et 3.

Ce dispositif de joint 8 comporte ainsi d'un tube de verre 80 de diamètre interne supérieur à celui externe du tube 50, introduit dans un évidement cylindrique 41 pratiqué dans le profilé 4, coaxialement au tube 50, tandis que d'une part un moyen d'étanchéité tel qu'un cordon 81 de butyle est déposé sur le pourtour du tube 80 à l'embouchure de l'évidement 41, et d'autre part, un moyen d'étanchéité, tel qu'un joint torique 82, réalise l'étanchéité entre le tube 50 et le tube 80.

Un tel joint 8 permet d'éviter une déperdition d'énergie calorifique en réduisant les zones de contact et en utilisant la même ambiance que le dispositif, et d'assurer l'étanchéité aux points d'entrée ou sortie du circuit du fluide caloporteur du panneau 1 avec des perméabilités au gaz et des tenues différentes à la température. De façon avantageuse le tube de verre 80 aura un dépôt sélectif aux infrarouges.

On notera que la description qui précède fait référence à des éléments aptes à absorber les apports solaires et des moyens réflecteurs qui d'évidence sont essentiellement horizontaux, mais il peut être prévu une autre disposition en fonction de la latitude d'installation du dispositif, lequel peut ainsi être installé verticalement auquel cas les représentations précédemment décrites peuvent s'interpréter comme l'évolution de l'interception solaire en fonction de la course du soleil au cours d'une demi-journée.

## Revendications

1. Dispositif de fermeture fixe ou mobile pour ouverture dans des bâtiments, apte à capter l'énergie solaire, du type panneau vitré (1), comprenant au moins deux parois transparentes intérieure (2) et extérieure (3), entretoisées par l'intermédiaire d'un profilé intercalaire (4), délimitant un espace (10) où sont disposés des moyens d'absorption (51) aptes à absorber les apports solaires et qui sont liés à un circuit (5) de collecte et de transport vers l'extérieur de l'énergie calorifique ainsi recueillie, **caractérisé en ce qu'**au moins ladite paroi intérieure (2) comporte des moyens réflecteurs (21) aptes, en coopération avec lesdits moyens d'absorption (51), à permettre l'utilisation d'une partie (Rₐ, R_{b}, R_{c}) dudit rayonnement solaire indirectement tandis qu'une autre partie (Sₐ, S_{b}, S_{c}) de ce dernier est utilisée directement, la disposition desdits moyens réflecteurs (21) par rapport auxdits moyens d'absorption (51) étant telle que la partition est réalisée dans une proportion qui varie de manière automatique avec la hauteur solaire, et que la transparence dudit panneau vitré (1) demeure constante.

2. Dispositif selon la revendication 1, **caractérisé en ce que** les moyens d'absorption (51) comportent une partie (53) destinée à recevoir directement le rayonnement solaire, et une seconde partie (52) destinée à recevoir ledit rayonnement par réflexion.

3. Dispositif selon la revendication 1 ou la revendication 2, **caractérisé en ce que** les deux parois transparentes (2, 3) comportent chacune des moyens réflecteurs (21) aptes à renvoyer au moins une partie du rayonnement solaire de l'une vers l'autre, tandis que l'énergie captée est véhiculée par l'ambiance étanche du panneau (1) prise comme fluide caloporteur, et qui est en liaison avec une circulation extérieure audit panneau (1) pour former un circuit indépendant.

4. Dispositif selon la revendication 1 ou la revendication 2, **caractérisé en ce que** le circuit (5) de transport de l'énergie calorifique est fait ou est revêtu d'un matériau apte à absorber les apports solaires.

5. Dispositif selon la revendication 1 ou la revendication 2, **caractérisé en ce que** le circuit (5) de collecte et de transport se présente sous la forme d'un tube (50) parcourant l'espace (10) interne aux deux parois transparentes (2, 3), et duquel partent deux ailettes (52, 53), chacune en regard de l'une desdites parois transparentes (2, 3) et qui constituent les première et seconde parties.

6. Dispositif selon la revendication 5, **caractérisé en ce que** les moyens d'absorption (51) et les moyens réflecteurs (21) sont arrangés en segments parallèles (54), tandis que les moyens réflecteurs se présentent sous forme de bandes (21) parallèles auxdits segments.

7. Dispositif selon la revendication 6, **caractérisé en ce que** les moyens réflecteurs se présentent sous la forme de bandes horizontales (21) disposées chacune au niveau de l'un des segments (54), l'emplacement et la hauteur desdites bandes (21) étant choisis en fonction essentiellement de l'espacement et de la hauteur desdits segments (54) ainsi que du résultat énergétique escompté.

8. Dispositif selon l'une quelconque des revendications précédentes, **caractérisé en ce que** les moyens réflecteurs (21) sont partiellement transparents.

9. Dispositif selon l'une quelconque des revendications précédentes, **caractérisé en ce que** les moyens réflecteurs (21) sont déposés sur une couche sélective aux infrarouges.

10. Dispositif selon l'une quelconque des revendications précédentes, **caractérisé en ce que** l'espace délimité (10) par les deux parois transparentes (2, 3) est dépressurisé.

11. Dispositif selon l'une quelconque des revendications précédentes, **caractérisé en ce que** l'espace délimité (10) par les deux parois transparentes (2, 3) renferme un ou plusieurs gaz inertes.

12. Dispositif selon l'une quelconque des revendications précédentes, **caractérisé en ce que** les parois transparentes (2, 3) comportent un dépôt réfléchissant au rayonnement visible et/ou infrarouge, ou bien diminuant la réflexion, ou ayant une constitution réduisant l'absorption au rayonnement visible.

13. Dispositif selon l'une quelconque des revendications précédentes, **caractérisé en ce que** le circuit de collecte comprend un tube (50) sortant du panneau (1) ou entrant dans ce dernier par l'intermédiaire d'un système étanche (8) qui comprend un tube de verre (80) introduit dans un évidement (41) pratiqué dans le profilé intercalaire (4) et solidarisé à celui-ci de manière étanche tandis qu'un joint (82) réalise l'étanchéité entre lesdits tubes (50, 80).

## Claims

1. Fixed or mobile device for closing openings in buildings, capable of capturing solar energy, of the glazed panel type (1), comprising at least two transparent inner (2) and outer (3) walls, spaced apart through an intercalated profile (4), delimiting a space (10) in which are arranged absorbing means (51) capable of absorbing the solar energy and which are connected to a circuit (5) for collecting and conveying towards the outside the heat energy thus collected, **characterised in that** at least said inner wall (2) includes reflecting means (21) capable, in co-operation with said absorbing means (51), of allowing using indirectly part (Rₐ, R_{b}, R_{c}) of said solar radiation, while another part (Sₐ, S_{b}, S_{c}) of the latter is used directly, the arrangement of said reflecting means (21) with respect to said absorbing means (51) being such that the separation occurs according to a proportion that automatically varies according to the height of the sun and that the transparency of said panel (1) remains constant.

2. Device according to claim 1, **characterised in that** the absorbing means (51) include a portion (53) aimed at directly receiving the solar radiation, and a second part (52) aimed at receiving said radiation through reflection.

3. Device according to claim 1 or claim 2, **characterised in that** the two transparent walls (2, 3) each include reflecting means (21) capable of sending back at least one part of the solar radiation from one of them to the other one, while the captured energy is conveyed by the tight ambience of the panel (1) taken as heat-carrying fluid, and which is in communication with a circulation outside said panel (1) in order to form an independent circuit.

4. Device according to claim 1 or claim 2, **characterised in that** the circuit (5) for conveying the heat energy is made out of or coated with a material capable of absorbing the solar energy.

5. Device according to claim 1 or claim 2, **characterised in that** the circuit (5) for collecting and conveying is in the form of a tube (50) crossing the space (10) internal to the two transparent walls (2, 3) and from which start two wings (52, 53), each one in front of one of said transparent walls (2, 3) and which form the first and second parts.

6. Device according to claim 5, **characterised in that** the absorbing means (51) and the reflecting means (21) are arranged in parallel sections (54), while the reflecting means are in the form of strips (21) parallel to said sections.

7. Device according to claim 6, **characterised in that** the reflecting means are in the form of horizontal strips (21) each arranged at the level of one of the sections (54), the location and the height of said strips (21) being chosen mainly depending on the separation between and the height of said sections (54) as well as on the expected energy result.

8. Device according to any of the preceding claims, **characterised in that** the reflecting means (21) are partly transparent.

9. Device according to any of the preceding claims, **characterised in that** the reflecting means (21) are arranged on an infrared-selective layer.

10. Device according to any of the preceding claims, **characterised in that** the space delimited (10) by the two transparent walls (2, 3) is depressurised.

11. Device according to any of the preceding claims, **characterised in that** the space delimited (10) by the two transparent walls (2, 3) contains one or several inert gases.

12. Device according to any of the preceding claims, **characterised in that** the transparent walls (2, 3) include a deposit reflecting at visible and infrared radiation, or reducing the reflection, or having a reflection reducing the absorption at visible radiation.

13. Device according to any of the preceding claims, **characterised in that** the collecting circuit comprises a tube (50) coming out of the panel (1) or entering into the latter through a tight system (8) that comprises a glass tube (80) inserted into a recess (41) provided for in the intercalated profile (4) and made integral with the latter in a tight way, while a seal (82) brings about the tightness between said tubes (50, 80).

## Patentansprüche

1. Feste oder mobile Schliessvorrichtung für Öffnungen in Gebäuden, die fähig ist, um Sonnenenergie einzufangen, der Art Glaspaneel (1), umfassend wenigstens zwei transparente innere (2) und äußere (3) Wände, die durch ein eingefügtes Profil (4) verbunden sind und einen Raum (10) abgrenzen, in dem Absorptionsmittel (51) angeordnet sind, die geeignet sind, um die Sonnenenergie zu absorbieren, und die mit einem Kreislauf (5) zur Sammlung und Beförderung zur Außenseite der so gesammelten wärmeerzeugenden Energie verbunden sind, **dadurch gekennzeichnet, daß** wenigstens die besagte innere Wand (2) Reflektormittel (21) umfaßt, die geeignet sind, um, in Zusammenarbeit mit den besagten Absorptionsmitteln (51), die Benutzung eines Teiles (Rₐ, R_{b}, R_{c}) der besagten Sonneneinstrahlung indirekt zu erlauben, während ein anderer Teil (Sₐ, S_{b}, S_{c}) dieser Letzteren direkt benutzt wird, wobei die Anordnung der besagten Reflektormittel (21) hinsichtlich der besagten Absorptionsmittel (51) so sei, daß die Aufteilung nach einem Verhältnis durchgeführt wird, das automatisch mit dem Sonnenhöhenwinkel variiert, und daß die Transparenz des besagten Glaspaneels (1) konstant bleibt.

2. Vorrichtung nach Anspruch 1, **dadurch gekennzeichnet, daß** die Absorptionsmittel (51) einen Teil (53), vorgesehen, um die Sonneneinstrahlung direkt aufzunehmen, und einen zweiten Teil (52), vorgesehen, um die besagte Strahlung durch Rückstrahlung aufzunehmen, umfassen.

3. Vorrichtung nach Anspruch 1 oder Anspruch 2, **dadurch gekennzeichnet, daß** die beiden transparenten Wände (2, 3) jeweils Reflektormittel (21) umfassen, die geeignet sind, um wenigstens einen Teil der Sonneneinstrahlung in Richtung aufeinander zurückzuschicken, während die gewonnene Energie durch den dichten Raum des Paneels (1) befördert wird, das als Wärmeübertragungsmittel genommen wird und in Verbindung mit einem Umlauf außerhalb des besagten Paneels (1) steht, um einen unabhängigen Kreislauf zu bilden.

4. Vorrichtung nach Anspruch 1 oder Anspruch 2, **dadurch gekennzeichnet, daß** der Kreislauf (5) zur Beförderung der wärmeerzeugenden Energie aus einem Material gemacht oder mit einem Material beschichtet ist, der geeignet ist, um die Sonnenzufuhr zu absorbieren.

5. Vorrichtung nach Anspruch 1 oder Anspruch 2, **dadurch gekennzeichnet, daß** der Kreislauf (5) zur Sammlung und Beförderung als eine Röhre (50) ausgestaltet ist, die den inneren Raum (10) zwischen den beiden transparenten Wände (2, 3) durchquert, und ab welcher zwei Flügelchen (52, 53) abgehen, die jeweils einer der besagten transparenten Wände (2, 3) gegenüberliegend sind, und die den ersten und den zweiten Teil bilden.

6. Vorrichtung nach Anspruch 5, **dadurch gekennzeichnet, daß** die Absorptionsmittel (51) und die Reflektormittel (21) als parallele Segmente (54) angeordnet sind, während die Reflektormittel als Leisten (21) ausgestaltet sind, die zu den besagten Segmenten parallel sind.

7. Vorrichtung nach Anspruch 6, **dadurch gekennzeichnet, daß** die Reflektormittel als horizontale Leisten (21) ausgestaltet sind, die jeweils im Bereich des einen von den Segmenten (54) angeordnet sind, wobei der Standort und die Höhe der besagten Leisten (21) hauptsächlich in Abhängigkeit von dem Abstand und von der Höhe der besagten Segmente (54) sowie von dem erwarteten Ergebnis hinsichtlich der Energie ausgewählt seien.

8. Vorrichtung nach irgendeinem der vorgehenden Ansprüche, **dadurch gekennzeichnet, daß** die Reflektormittel (21) zum Teil transparent sind.

9. Vorrichtung nach irgendeinem der vorgehenden Ansprüche, **dadurch gekennzeichnet, daß** die Reflektormittel (21) auf einer auf Infrarot selektiven Schicht gelagert sind.

10. Vorrichtung nach irgendeinem der vorgehenden Ansprüche, **dadurch gekennzeichnet, daß** der Raum (10), der durch die beiden transparenten Wände (2, 3) abgegrenzt ist, auf normalen Luftdruck gebracht ist.

11. Vorrichtung nach irgendeinem der vorgehenden Ansprüche, **dadurch gekennzeichnet, daß** der Raum (10), der durch die beiden transparenten Wände (2, 3) abgegrenzt ist, ein oder mehrere Inertgase enthält.

12. Vorrichtung nach irgendeinem der vorgehenden Ansprüche, **dadurch gekennzeichnet, daß** die transparenten Wände (2, 3) eine Abscheidung umfassen, die bei der sichtbaren und/oder infraroten Strahlung reflektierend ist, beziehungsweise die Rückstrahlung vermindert, oder eine Konstruktion hat, die die Absorption bei der sichtbaren Strahlung reduziert.

13. Vorrichtung nach irgendeinem der vorgehenden Ansprüche, **dadurch gekennzeichnet, daß** der Sammlungskreislauf eine Röhre (50) umfaßt, die aus dem Paneel (1) herausragt oder in dieses Letztere durch ein dichtes System (8) eingeht, das eine Glasröhre (80) umfaßt, die in eine Ausnehmung (41) eingeführt ist, die in dem eingefügten Profil (4) vorgesehen und mit diesem Letzteren auf dichte Art und Weise fest verbunden ist, während eine Dichtung (82) die Abdichtung zwischen den besagten Röhren (50, 80) verwirklicht.
